# EUROPEAN PATENT APPLICATION

(11) **EP 4 492 588 A1**
(43) Date of publication of application: **15.01.2025**
(21) Application number: 23767100.3
(22) Date of filing: 06.03.2023
(51) Int. Cl.: H01R 13/639, G03B 30/00, G03B 17/56, B60R 1/22, B60R 16/023, H01R 24/38

(54) **CONNECTOR MODULE AND VEHICLE CAMERA COMPRISING SAME**

(30) Priority: 07.03.2022 KR 20220028970
(71) Applicant: LG INNOTEK CO., LTD., Seoul 07796 (KR)
(72) Inventor: LEE, Seung Ho, Seoul 07796 (KR)
(74) Representative: M. Zardi & Co S.A.
(86) International application number: PCT/KR2023/003014
(87) International publication number: WO 2023/171999

(57) **Abstract**

A connector module comprises: a first connector comprising a first terminal and a first body in which the first terminal is disposed; and a second connector comprising a second terminal electrically connected to the first terminal and a second body in which the second terminal is disposed. The second body comprises a space portion to which at least a part of the first body is coupled and a through hole formed from the inner surface of the space portion so as to pass through the outer surface of the second body, and the first body comprises a protrusion which protrudes from the outer surface thereof more than other areas so as to be coupled to the through hole. The connector module comprises a cover disposed outside the through hole, wherein the cover comprises a hole to which the protrusion is coupled.

## Description

### [Technical Field]

The teachings in accordance with exemplary and non-limiting embodiments of this invention relate generally to a connector module and a vehicle camera comprising the same.

### [Background Arts]

Generally, a vehicle is equipped with a rear-view mirror and left and right side mirrors, and when the vehicle is reversing or parked, the rear view mirror and side mirrors are used to check the situation behind the vehicle.

However, there is a risk of collision when parking or reversing a vehicle due to the existence of blind spots in the rear view mirror and side mirrors.

Since the driver cannot check the blind spot at the rear of the vehicle while the vehicle is in motion, it is inconvenient for the driver to get out of the vehicle to check the blind spot at the rear of the vehicle, or for someone other than the driver to check the blind spot at the rear of the vehicle.

Accordingly, a vehicle camera for photographing the blind spot at the rear of a vehicle and outputting it to a display part inside the vehicle has been required, and in recent years, there has been a trend to equip vehicles with such cameras.

A vehicle camera includes a lens, a lens holder for receiving the lens, an image sensor for converting an image of an object gathered by the lens into an electrical signal, and a printed circuit board on which the image sensor is mounted. The vehicle camera also includes a connector module for receiving power, transmitting and receiving signals. The connector module is formed by coupling between a plurality of connectors, and there is a problem that the coupling force between the plurality of connectors is not maintained consistently due to external impact due to the characteristics of the installation area.

### [Summary of the Invention]

### [Technical Subject]

The present exemplary embodiment is to provide a connector module and a vehicle camera comprising the same that can improve electrical characteristics by maintaining a constant state of coupling between a plurality of connectors.

### [Technical Solution]

In one general aspect of the present invention, there may be provided a connector module, comprising:
a first connector comprising a first terminal and a first body in which the first terminal is disposed; and
a second connector comprising a second terminal electrically connected to the first terminal and a second body in which the second terminal is disposed, wherein the second body comprises a space portion to which at least a part of the first body is coupled and a through-hole formed from the inner surface of the space portion so as to pass through the outer surface of the second body, and the first body comprises a protrusion which protrudes from the outer surface thereof more than other areas so as to be coupled to the through-hole, and wherein the connector module comprises a cover disposed outside the through-hole, wherein the cover comprises a hole to which the protrusion is coupled.

Preferably, but not necessarily, a spacing between the inner surface of the through-hole and the outer surface of the protrusion may be from 0 mm to 0.1 mm.

Preferably, but not necessarily, the spacing between the inner surface of the hole and the outer surface of the protrusion may be larger than the spacing between the inner surface of the through-hole and the outer surface of the protrusion.

Preferably, but not necessarily, a guide groove may be arranged on the inner surface of the space portion, which is more recessed outwardly from the other regions, and a guide projection may be arranged on the outer surface of the first body, which protrudes outwardly from the other regions and is coupled to the guide groove.

Preferably, but not necessarily, the guide projection may be provided in plurality and may be arranged symmetrically with respect to each other with respect to the center of the first body.

Preferably, but not necessarily, the protrusion may include a first protrusion disposed in the through-hole, a second protrusion disposed in the hole, and an upper surface of the second protrusion may include an inclined surface.

Preferably, but not necessarily, an inner surface of the space portion may include a protrusion projecting inwardly from the other regions, the space portion may comprise a first region to which the first body is coupled, and a second region to which the protrusion is disposed.

Preferably, but not necessarily, the distance from an end surface of the first body coupled to the space portion to the projection may be between 0.075 mm and 0.125 mm.

Preferably, but not necessarily, the protrusion may be provided in plurality and spaced apart from each other along the longitudinal direction of the second body, and an outer surface of the second terminal may be provided with a rib that projects outwardly and coupled between adjacent the protrusions.

In another general aspect of the present invention, there may be provided a vehicle camera comprising:
a housing; and a connector module protruding at least partially outwardly of the housing through a hole formed in the housing, wherein the connector module comprises:
a first connector having a first terminal, and a first body having the first terminal disposed therein; and
a second connector comprising a second terminal in electrical connection with the first terminal, and a second body disposed therein, wherein second body comprises: a space portion in which at least a part of the first body is coupled; and
a through-hole formed to penetrate an outer surface of the second body from an inner surface of the space portion, wherein
the first body comprises a protrusion protruding from the outer surface and coupled to the through-hole, and comprises a cover disposed on an outer side of the through-hole, the cover including a hole in which the protrusion is coupled.

### [Advantageous Effects]

The exemplary embodiments have the advantages of preventing random flow of the plurality of connectors, thereby maintaining a firm bond between the plurality of connectors.

### [Brief Descriptions of Drawings]

FIG. 1 is a perspective view illustrating the appearance of a connector module according to an exemplary embodiment of the present invention.
FIG. 2 is an exploded perspective view of a connector module according to an exemplary embodiment of the present invention.
FIG. 3 is a drawing showing FIG. 2 from a different angle.
FIG. 4 is a cross-sectional view illustrating a coupled structure of the first connector in the space portion of the second connector, according to an exemplary embodiment of the present invention.
FIG. 5 is a cross-sectional view illustrating a coupled structure of a connector module according to an exemplary embodiment of the present invention.
FIG. 6 is a graph comparing the electrical characteristics of a connector module according to an exemplary embodiment of the present invention and a connector module according to the prior art.
FIG. 7 is a graph illustrating the electrical connection characteristics of the first and second pins based on the distance between the distal ends of the first-2 body and the protrusions.

### [Best Mode]

Hereinafter, exemplary embodiments of the present invention will be described in detail with reference to the accompanying drawings.

However, the present invention is not limited to the given exemplary embodiments described, but may be implemented in a variety of different forms, and one or more of components among the exemplary embodiments may be optionally combined or substituted between embodiments within the scope of the present invention.

Furthermore, terms (including technical and scientific terms) used in the embodiments of the present invention, unless expressly specifically defined and described, are to be interpreted in the sense in which they would be understood by a person of ordinary skill in the art to which the present invention belongs, and commonly used terms, such as dictionary-defined terms, are to be interpreted in light of their contextual meaning in the relevant art.

Furthermore, the terms used in the embodiments of the invention are intended to describe the embodiments and are not intended to limit the invention.

In this specification, the singular may include the plural unless the context otherwise requires, and references to "at least one (or more) of A and (or) B and C" may include one or more of any combination of A, B, and C that may be assembled.

In addition, the terms first, second, A, B, (a), (b), and the like may be used to describe components of embodiments of the invention. Such terms are intended only to distinguish one component from another, and are not intended to limit the nature or sequence or order of such components by such terms.

Furthermore, when a component is described as "connected," "coupled," or "attached" to another component, it can include cases where the component is "connected," "coupled," or "attached" to the other component directly, as well as cases where the component is "connected," "coupled," or "attached" to another component that is between the component and the other component.

Furthermore, when described as being formed or disposed "above" or "below" each component, "above" or "below" includes not only when two components are in direct contact with each other, but also when one or more other components are formed or disposed between the two components. Furthermore, when expressed as "above" or "below", it may include the meaning of upward as well as downward with respect to a single component.

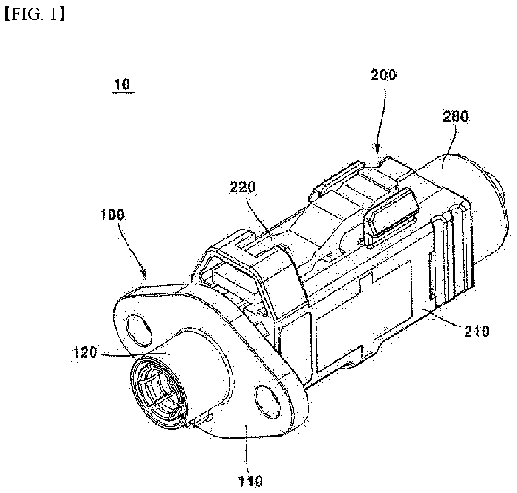

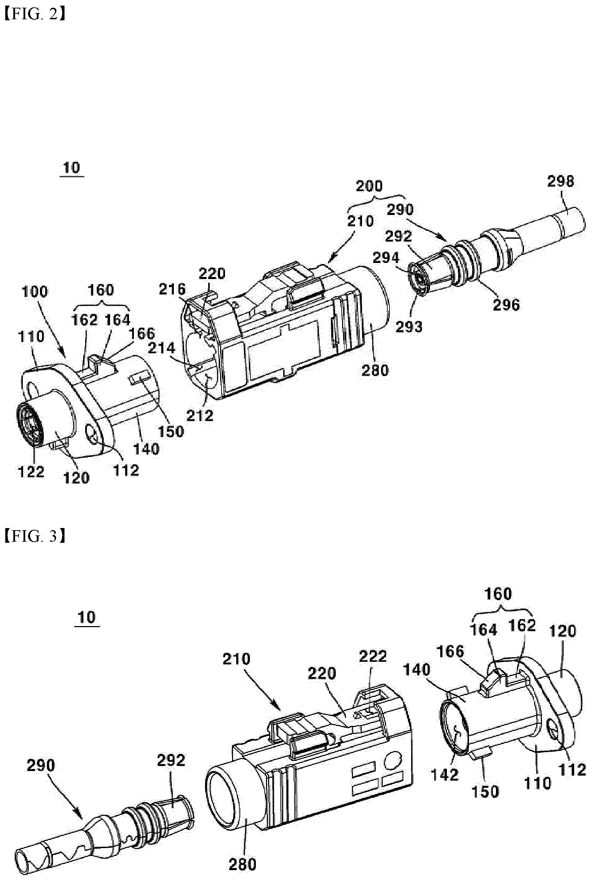

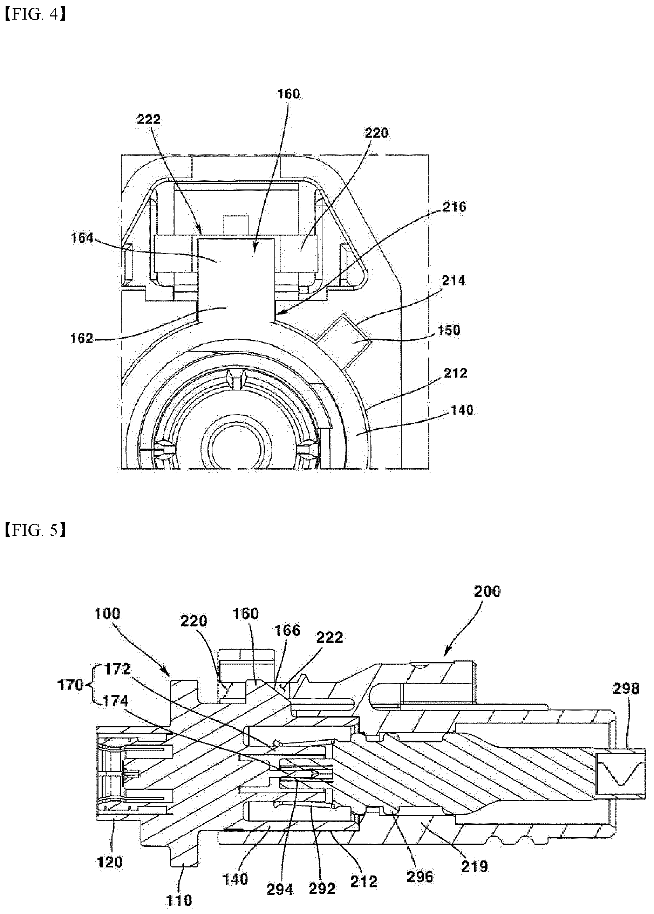

FIG. 1 is a perspective view illustrating the appearance of a connector module according to an exemplary embodiment of the present invention, FIG. 2 is an exploded perspective view of a connector module according to an exemplary embodiment of the present invention, FIG. 3 is a drawing showing FIG. 2 from a different angle, FIG. 4 is a cross-sectional view illustrating a coupled structure of the first connector in the space portion of the second connector, according to an exemplary embodiment of the present invention, and FIG. 5 is a cross-sectional view illustrating a coupled structure of a connector module according to an exemplary embodiment of the present invention.

Referring now to FIGS. 1 to 5, the connector module (10) according to an exemplary embodiment of the present invention may be coupled to a vehicle camera. The vehicle camera may be coupled to a vehicle. The vehicle camera may be used in one or more of a front camera, a side camera, a rear camera, and a black box of the vehicle. The vehicle camera may be disposed at the front of the vehicle. The vehicle camera may be disposed at the rear of the vehicle. The vehicle camera may be coupled to a windscreen of the vehicle. The vehicle camera may be coupled to the windscreen of the front or rear of the vehicle. The vehicle camera may be positioned on the side of the vehicle. The vehicle camera may capture an image of a subject and output the image to a display (not shown).

A vehicle camera may include a housing, which may include a lens, a printed circuit board, and an image sensor mounted on the printed circuit board. The housing includes a hole through which a connector module (10) passes, and through which the connector module (10) may be disposed such that a part of the connector module (10) is disposed within the housing and a part of the connector module (10) protrudes outside of the housing.

The connector module (10) may include a first connector (100) and a second connector (200).

The first connector (100) and the second connector (200) may be electrically connected to each other. The second connector (200) may be electrically connected to a printed circuit board in the vehicle camera. The second connector (200) may be physically coupled to the printed circuit board in the vehicle camera. The second connector (200) may be arranged to pass through a hole in the housing. However, this is exemplary, and of the first connector (100) and the second connector (200), the first connector (100) may be disposed to pass through a hole in the housing and may be physically coupled to the printed circuit board.

The electrical and physical connection of the first connector (100) and the second connector (200) may allow power to be provided to the vehicle camera, signals to be transmitted or received for control of the vehicle camera, or images captured by the vehicle camera to be delivered to other configurations.

The first connector (100) may be referred to as a male connector. The first connector (100) may include a first body. The first body may form an appearance of the first connector (100). The first body may have a circular cross-section and may include a space therewithin that houses a first terminal (170). The first body may include a first-1 body (120) and a first-2 body (140). The space in the first-1 body (120) and the space in the first-2 body (140) may be interconnected. The first-1 body (120) and the first-2 body (140) may each include a first space (122) and a second space (142) to receive the first terminal (170) therein. The first space (122) and the second space (142) may each have a hole shape that is exposed outwardly at one end and the other end of the first body, respectively. The first-1 body (120) and the first-2 body (140) may have different cross-sectional areas. For example, the cross-sectional area of the first-2 body (140) may be larger than the cross-sectional area of the first-1 body (120).

Between the first-1 body (120) and the first-2 body (140), a bracket (110) may be formed having a larger cross-sectional area than the other areas, for securing the first connector (100) to the installation area. The bracket (110) may have the shape of a plate having a predetermined thickness and may include a hole (112) through which a screw (not shown) is coupled from one side through the other side.

The first-2 body (140) is a region that inserts into a space portion (212) in the second connector (200), which will be described later, and may have a shape that protrudes from one surface of the bracket (110). The outer surface of the first-2 body (140) may have a guide projection (150) that project outwardly from other areas. The guide projection (150) may be coupled to a guide groove (214), which will be described later, and may be slidably moved along the guide groove (214) when the first-2 body (140) is coupled in the space portion (212). The guide projection (150) may be provided in plurality and may be symmetrically disposed relative to each other with respect to the center of the first-2 body (140).

The outer surface of the first-2 body (140) may have a protrusion (160) that project outwardly from other areas. The protrusion (160) is for hook engagement of the first connector (100) and the second connector (200), and may be shaped to project upwardly from the upper surface of the first-2 body (140). The protrusion (160) may be formed on one end of the first-2 body (140) adjacent to the bracket (110).

The protrusion (160) may include a first protrusion (162) projecting upwardly from an upper surface of the first-2 body (140), and a second protrusion (164) projecting upwardly from an upper surface of the first protrusion (162). The upper surface of the first protrusion (162) and the upper surface of the second protrusion (164) may be disposed in staircase with each other in an upward and downward direction.

With respect to the coupled direction of the first connector (100), the upper surface of the second protrusion (164) may have an inclined surface (166) shaped to increase the height of the protrusion from the upper surface of the first-2 body (140) towards the rear. The inclined surface (166) allows the protrusion (160) to be more easily guided into the coupling hole (222) (FIG. 3) of the second connector (200), which will be described later.

The first connector (100) may include a first terminal (170) (see FIG. 5). The first terminal (170) may be disposed in a space within the first body. The length of the first terminal (170) may be less than the length of the first body. The first terminal (170) may include a first coupling portion (172) and a first pin (174) disposed on an inner side of the first coupling portion (172). The first coupling portion (172) may be circular in cross-section.

The second connector (200) may be referred to as a female connector. The second connector (200) may include a second body (210). The second body (210) may form an outer shape (appearance) of the second connector (200). The second body (200) may have a space portion (212) formed therein. The space portion (212) may be in the shape of a hole that passes through from one end of the second body to the other end of the second body (200). The space portion (212) may be circular in cross-section.

An inner surface of the space portion (212) may have a protrusion (219) that protrudes inwardly from the other regions. Due to the protrusion (219), the space portion (212) may have a plurality of regions with different cross-sectional areas. For example, the space portion (212) may include a first region disposed at one end of the second body (210), a second region disposed inwardly of the protrusion (219), and a third region disposed at the other end of the second body (210). The first and third regions may be disposed sequentially along the longitudinal direction of the second body (210). The cross-sectional area of the third region may be larger than the second region and smaller than the first region. The inner surface of the protrusion (219) may have at least one or more coupling projections (not shown) that project inwardly from the other regions.

Meantime, the second body (210) may include an extension portion (280) where the third region of the first to third regions is disposed inwardly. The extension portion (280) may protrude outwardly from the other regions and may have a circular cross-sectional shape. The extension portion (280) may be formed with a smaller thickness than the other regions.

The first connector (100) may be at least partially coupled to the first region. The first-2 body (140) may be coupled to the first region. A guide groove (214) may be formed on an inner surface of the space portion (212) forming the first region that is more outwardly recessed than the other regions. The guide groove (214) may be disposed to face a guide projection (150) of the first connector (100). During the coupling process of the first connector (100), the guide projection (150) may be slidably moved along the guide groove (214).

On the other hand, to prevent the guide projection (150) from interfering with the protrusion (160) during coupling process of the first-1 body (140) to the first region, the second body (210) may include a through-hole (216) extending through the upper surface of the second body (210) from the inner surface of the space portion (212). With the first connector (100) being uncoupled, at least a part of the space portion (212) may be opened upwardly by the through-hole (216).

A cover (220) may be disposed on the upper surface of the through-hole (216). The cover (220) may be spaced apart in an upward and downward direction from the upper surface of the second body (210). The cover (220) may be formed in the shape of a plate. The cover (220) may be formed integrally with the second body (210). The cover (220) may include a hole (222) extending downwardly from the upper surface, and the hole (222) may be coupled with the protrusion (160). Thus, upon engagement (coupling) of the first connector (100) and the second connector (200), the protrusion (160) may pass through the through-hole (216) and may be coupled to the hole (222). At this time, the upper surface of the protrusion (160) may be slid along the lower surface of the cover (220) via the inclined surface (166), and the protrusion (160) may be guided into the hole (222).

As shown in FIG. 4, when the first connector (100) and the second connector (200) are coupled, at least a portion of the first protrusion (162) may be disposed within the through-hole (216) and at least a portion of the second protrusion (164) may be disposed within the hole (222).

A second terminal (290) may be disposed in the space portion (212) within the second body (210). The second terminal (290) may have a bar shape and may be disposed longitudinally along the first, second, and third regions within the space portion (212). The second terminal (290) may include one end disposed in the first region and the other end disposed in the third region. The second terminal (290) may have a plurality of regions having different cross-sectional areas.

As shown in FIG. 2, the second terminal (290) may include a rib (296) projecting outwardly from the outer surface. The rib (296) may be provided in plurality and spaced apart from each other along the longitudinal direction of the second terminal (210). The rib (296) may be formed on an outer circumferential surface of the second terminal (290) disposed within the second region. The rib (296) may have a ring-like cross-sectional shape. The rib (296) may contact the inner circumferential surface of the second region when the second terminal (290) is coupled within the space portion (212). A groove-shaped rib groove may be formed between adjacent ribs (296), and the rib groove may be coupled with the coupling projection described above. Accordingly, the second terminal (290) may be prevented from random longitudinal movement when coupled within the space portion (212).

At one end of the second terminal (290), a second coupling portion (292) and a second pin (294) disposed on the inner side of the second coupling portion (292) and having a pinhole formed in its center may be formed. Upon coupling with the first connector (100) and the second connector (200), the first pin (174) may be coupled within the pinhole of the second pin (294). The second coupling portion (292) may have a circular cross-sectional shape and may have a space (293) formed therein into which the first coupling portion (212) is coupled. The second coupling portion (292) may comprise a plurality of plates disposed along a circumferential direction. Each of the plurality of plates may have a predetermined curvature and may have an incised area with adjacent plates. Accordingly, when the first coupling portion (212) is coupled in the space (293), the outer surface of the first coupling portion (212) can be resiliently supported.

The second terminal (290) may be formed with a smaller cross-sectional area than the other regions. The other end of the second terminal (290) may protrude outwardly from the second body (210).

As shown in FIG. 4, the spacing between the sides of the protrusion (160) and the inner surface of the through-hole (216) may be from 0 mm to 0.1 mm in order to maintain a firm bond between the first connector (100) and the second connector (200). Here, the inner surface of the through-hole (216) may be the side facing the side of the protrusion (160) in a second direction Y perpendicular to the first direction X, which is an upward and downward direction, of the region forming the inner circumferential surface of the through-hole (216). On the other hand, the side of the protrusion (160) may contact the inner surface of the through-hole (216) when the spacing between the inner surfaces of the through-hole (216) is 0 mm.

Furthermore, the spacing between the inner surface of the hole (222) in the cover (220) and the protrusion (160) may be formed larger than the spacing between the protrusion (160) and the inner surface of the through-hole (216). Specifically, when the spacing between the inner surface of the hole (222) and the outer surface of the protrusion (160) is referred to as a first spacing and the spacing between the side of the protrusion (160) and the inner surface of the through-hole (216) is referred to as a second spacing, the first spacing may be formed larger than the second spacing.

As shown in FIG. 5, the distance between the ends of the first-2 body (140) that are joined in the first region and the end surface of the first region may be 0.075 mm to 0.125 mm. Here, the end surface of the first region is the region bordering the second region, or in other words, the distance from the end surface of the first-2 body (140) to the protrusion (160), relative to the coupling direction of the first connector (100), may be 0.075 mm to 0.125 mm.

According to the structure as described above, it is advantageous to prevent random flow of the first connector (100) and the second connector (200), so that the coupling state of the first connector (100) and the second connector (200) can be firmly maintained.

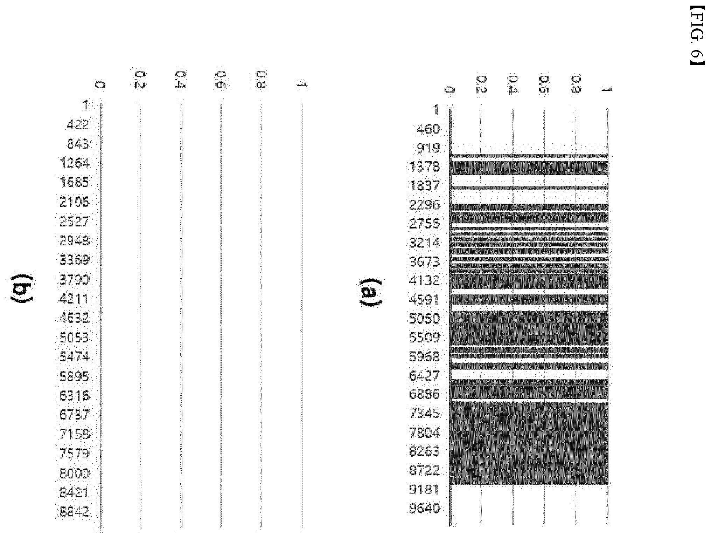

FIG. 6 is a graph comparing the electrical characteristics of a connector module according to an exemplary embodiment of the present invention and a connector module according to the prior art.

Referring to (a) of FIG. 6, the connector module according to the prior art has a number of cases in which an electrical short circuit (in a state of 1 with respect to the y-axis) occurs between the first pin and the second pin due to the occurrence of vibration in consideration of the characteristics of vehicle camera.

However, referring to (b) of FIG. 6, it can be seen that in the connector module (10) according to the present embodiment, the electrical connection between the first pin (174) and the second pin (294) always remains constant (in a state of zero with respect to the y-axis) even when vibration is generated by the aforementioned random flow prevention structure.

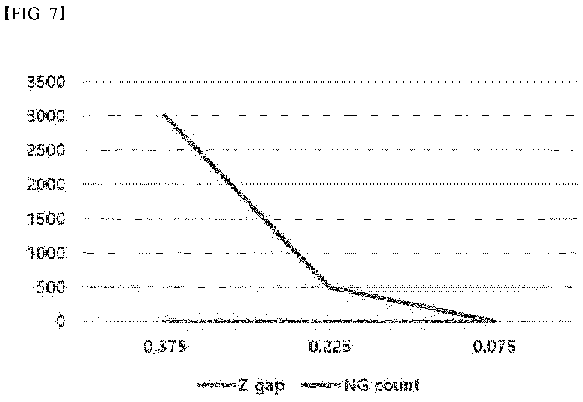

FIG. 7 is a graph illustrating the electrical connection characteristics of the first and second pins based on the distance between the distal end of the first-2 body and the protrusion.

Referring to FIG. 7, it can be seen that, as described above, the electrical connection characteristics of the first connector (100) and the second connector (200) via the first pin and the second pin are most excellent when the distance from the end surface of the first-2 body (140) to the protrusion (219) is 0.075 mm. However, the range of stable distances from the end surfaces of the first-2 body (140) to the protrusion (219) may range from 0.075 mm to 0.125 mm when including cases below 200 where the electrical connection state is substantially convergent to zero.

Although all of the components comprising embodiments of the present invention have been described above as being combined or operating in combination, the invention is not necessarily limited to these embodiments, i.e., all of the components may optionally be combined in one or more combinations, as long as they are within the scope of the present invention. Furthermore, the terms 'comprising,' `consisting of,' `consisting of,' or 'having' as used herein, unless specifically indicated to the contrary, are intended to mean that the component in question may be inherent in, and therefore should be construed to be inclusive of, rather than exclusive of, other components. All terms, including technical or scientific terms, unless otherwise defined, shall have the same meaning as commonly understood by one having ordinary knowledge in the technical field to which the invention belongs. Commonly used terms, such as dictionary-defined terms, are to be interpreted as consistent with their contextual meaning in the relevant art and are not to be construed in an idealized or unduly formal sense unless expressly defined in the present invention.

The above description is merely an exemplary description of the technical ideas of the invention, and various modifications and variations will be apparent to one having ordinary knowledge in the technical field to which the invention belongs without departing from the essential features of the invention. Accordingly, the embodiments disclosed herein are intended to illustrate, not to limit, the technical ideas of the invention, and the scope of the technical ideas of the invention is not limited by these embodiments. The scope of protection of the present invention shall be construed in accordance with the following claims, and all technical ideas within the scope thereof shall be construed as falling within the scope of the present invention.

## Claims

1. A connector module comprising:
a first connector comprising a first terminal and a first body in which the first terminal is disposed; and
a second connector comprising a second terminal electrically connected to the first terminal and a second body in which the second terminal is disposed,
wherein the second body comprises a space portion to which at least a part of the first body is coupled and a through hole formed from an inner surface of the space portion so as to pass through an outer surface of the second body,
the first body comprises a protrusion which protrudes from an outer surface thereof more than other areas so as to be coupled to the through hole,
wherein the connector module comprises a cover disposed outside the through hole, and
wherein the cover comprises a hole to which the protrusion is coupled.

2. The connector module of claim 1, wherein a spacing between an inner surface of the through-hole and an outer surface of the protrusion is from 0 mm to 0.1 mm.

3. The connector module of claim 1, wherein a spacing between an inner surface of the hole and the outer surface of the protrusion is larger than the spacing between the inner surface of the through-hole and the outer surface of the protrusion.

4. The connector module of claim 1, wherein a guide groove is arranged on the inner surface of the space portion, which is recessed outwardly from other regions, and a guide projection is arranged on the outer surface of the first body, which protrudes outwardly from other regions and is coupled to the guide groove.

5. The connector module of claim 4, wherein the guide projection is provided in plurality and arranged symmetrically with respect to each other with respect to a center of the first body.

6. The connector module of claim 1, wherein the protrusion includes a first protrusion disposed in the through-hole, a second protrusion disposed in the hole, and an upper surface of the second protrusion includes an inclined surface.

7. The connector module of claim 1, wherein an inner surface of the space portion includes a protrusion projecting inwardly from other regions, the space portion includes a first region to which the first body is coupled, and a second region to which the protrusion is disposed.

8. The connector module of claim 7, wherein a distance from an end surface of the first body coupled to the space portion to the projection is between 0.075 mm and 0.125 mm.

9. The connector module of claim 7, wherein the protrusion is provided in plurality and spaced apart from each other along a longitudinal direction of the second body, and an outer surface of the second terminal is provided with a rib that projects outwardly and is coupled between adjacent the protrusions.

10. A vehicle camera comprising:
a housing; and
a connector module protruding at least partially outwardly of the housing through a hole formed in the housing,
wherein the connector module comprises:
a first connector comprising a first terminal and a first body in which the first terminal is disposed; and
a second connector comprising a second terminal electrically connected to the first terminal and a second body in which the second terminal is disposed,
wherein the second body comprises a space portion to which at least a part of the first body is coupled and a through hole formed from an inner surface of the space portion so as to pass through an outer surface of the second body,
the first body comprises a protrusion which protrudes from an outer surface thereof more than other areas so as to be coupled to the through hole,
wherein the connector module comprises a cover disposed outside the through hole, and
wherein the cover comprises a hole to which the protrusion is coupled.
